# EUROPEAN PATENT SPECIFICATION

(11) **EP 3 983 643 B1**
(45) Date of publication and mention of the grant of the patent: **31.07.2024**
(21) Application number: 19783602.6
(22) Date of filing: 17.06.2019
(51) Int. Cl.: E21B 43/00

(54) **GEOLOGICAL GRID ANALYSIS**
ANALYSE GEOLOGISCHER GITTER
ANALYSE DE GRILLE GÉOLOGIQUE

(43) Date of publication of application: 20.04.2022
(73) Proprietor: TotalEnergies OneTech, 92400 Courbevoie (FR)
(72) Inventor: THORE, Pierre, 64018 Pau Cedex (FR)
(74) Representative: Bandpay & Greuter
(86) International application number: PCT/IB2019/000790
(87) International publication number: WO 2020/254851

(56) References cited:
- EP-A1- 2 098 887
- WO-A1-00/79423
- WO-A1-2006/127151
- US-B2- 9 733 388
- RAWLINSON N ET AL: "Wave front evolution in strongly heterogeneous layered media using fast marching method", GEOPHYSICAL JOURNAL INTERNATIONAL, BLACKWELL SCIENTIFIC PUBLICATIONS, OXFORD, GB, vol. 156, no. 3, 1 January 2004 (2004-01-01), pages 631 - 647, XP002489481, ISSN: 0956-540X, DOI: 10.1111/J.1365-246X.2004.02153.X

## Description

### FIELD OF THE INVENTION

The invention relates to a computer-implemented method of geological grid analysis, for hydrocarbon production, based on values of a geological attribute in a subsoil, and to a computer program and a device therefore.

### BACKGROUND

A geological grid designates any computerized representations of geological environments (e.g. a subsoil, a portion of the earth's crust). Such a computerized representation may comprise geological attribute values, which may also be referred to as property values, which are values representative of geological attributes and/or properties of the subsoil. A geological grid may be a geomodel, a seismic grid, or an intermediary grid called a Hybrid-Grid.

A geomodel may comprise a geometrical grid (or mesh) representing a geological environment. The geometrical grid may conform to shapes of geological structures within the geological environment, such as horizons, fault surfaces, channels and/or reservoirs. For example, horizons may correspond to layer structures of the geometrical grid and fault surfaces may correspond to stair-stepped structures of the geometrical grid. A geomodel may further comprise geological attribute values which represent values of geological attributes (or properties, such as petrophysical properties) of the geological structures, and which are assigned to geometrical structures of the geometrical grid.

A seismic grid may feature seismic properties of the 3D or 4D anomaly type to measure drained volumes or pseudo petrophysical properties (i.e. transformed seismic properties) to measure sand volumes. In both cases, the seismic properties are complex images of petrophysical properties or dynamical properties. They are not interesting as such but the underlying information are of interest.

A Hybrid-Grid is a mixture of reservoir and seismic grid which has the seismic grid resolution in X and Y and the vertical resolution in Z or time and it is usually used to perform seismic inversion and contains 3D or 4D anomaly type to measure drained volumes or pseudo petrophysical properties. It is used to facilitate the transfer of properties between seismic grid and reservoir grid back and forth.

Geological grid analysis refers to all techniques for performing computerized or computer-based analysis of a geological grid. Geological grid analysis of one or more geological grids may notably be part of a process of hydrocarbon production and/or may yield results based on which hydrocarbon production decisions may be taken. A geomodel is a numerical representation of the earth and is based on the integration of many different attributes from various disciplines. The model is always an approximate representation of truth and the new trend is to represent many realizations of the model in order to cover as much as possible the range of possible. Associated with that, new algorithms (ensemble based) have been developed to produce these realizations of the model (e.g. stochastic inversion, various geostatistical technologies) or to exploit the multi-realizations to perform optimization of model and risk analysis (e.g. Assisted History Matching with Ensemble Methods).

Even on a single model realization it is difficult to explore and analyze the model and to determine where are the risked areas. One of the basic ways of doing that is to examine the model visually, but on a complex 3D object it is a tedious hazardous task. Another approach is to "simulate" the model (e.g. using a flow simulator) but this is long, costly and provides information on the simulated parameter and not directly on the model itself. Another more practical option is to use proxies such as connectivity and to calculate connected volumes.

An approach exists for computing volume/bodies using Fast Marching as a proxy for flow simulation. The results of this analysis is a connected body to a source position, but the size and the shape of the body is strongly dependent on the "slowness" and the cut-off used for the Fast Marching.

Bodies are 3D (possibly very complicated) surfaces and are not so easy to manipulate and to scrutinized.

The problem is even more difficult when dealing with multi-realizations since the man's mind is essentially efficient for 2D representation (like a movie) but very bad at integrating multiple 3D realizations.

Documents EP 2 098 887 A1 and WO 2006/127151 A1 both describe methods for determining the connectivity of hydrocarbon reservoirs.

There is thus a need for an improved method of geological grid analysis that aims at facilitating the analysis of either a single or multi-realizations of a model by providing a much more convenient way of visualizing key information and providing quantitative information on the model.

### SUMMARY OF THE INVENTION

It is therefore provided a computer-implemented method of geological grid analysis according to claim 1, for hydrocarbon production, based on values of a geological attribute in a subsoil. The method comprises providing one or more geological grids. Each geological grid represents the subsoil. Each geological grid comprises respective cells. Each cell represents a respective portion of the subsoil. The method further comprises, for each geological grid, providing a first distribution. The first distribution comprises geological attribute values each on a respective cell. Each geological attribute value represents a value of the geological attribute in the respective portion. The method further comprises, for each geological grid, determining a second distribution based on the first distribution. The second distribution comprises flux values each on a respective cell. Each flux value represents a flux of the geological attribute in the respective portion.

This constitutes an improved method of geological grid analysis.

Notably, the method yields a distribution of flux values on respective cells of each respective one of the one or more geological grid. In other words, the method yields, for one or more geological grid representing a same subsoil, numerical data representative of a propagation and/or a flux of the geological attribute through the subsoil. Said otherwise, the determined second distribution quantifies how the geological attribute propagates throughout portions of the subsoil. This allows many applications, including the inference/determination paths of propagation of the geological attribute throughout the subsoil, as further discussed hereinafter.

In examples of the method, such a path inferred by the method is a path of propagation of fluid flows which connects an injection well to a production well within the subsoil. In these examples, the geological attribute may be a permeability, or any physical quantity related to a permeability. Inferring paths of propagation of permeability through the subsoil yields as such paths of propagation of fluid flows. Several of such paths may be inferred. This means that in examples, the method yields information about several (e.g. all) paths of propagation of fluid flows each connecting an injection well to a same production well. The method may in fact allow to find all the paths that leave from an injection well or that converge towards a production well. The method may also allow to determine which injection well is the most quickly connected to the production well. Alternatively or additionally, as the second distribution notably comprises flux values representative of portions (e.g. within injection wells) of the subsoil where fluids flow may not propagate *(i.e.* portions of too weak permeability), drilling and/or production decisions may be taken. Regarding the dynamics that is in question here, what the stream will highlight easily is the path followed to connect two poles and ensure the fact that the connection is solid or not.

Notably, the aforementioned production/injection wells, or at least a part of them, may be real wells, *i.e.* existing wells already drilled in the subsoil and that are represented numerically within each geological grid. Additionally or alternatively, these wells or at least a part of them may be virtual wells, *i.e.* numerical representations of wells to be possibly drilled in the real world but of which drilling may be conditioned to a drilling decision to be taken, e.g. as a result of the geological grid analysis by the method.

Other examples of such paths may represent information on any type of geological object, such as channels, lobes, turbidity, fans, debris flows.

Moreover, when there are several geological grids or realizations of geological grids, the method allows to compare the propagation of the geological attribute from one geological grid to the other and/or to compute cumulative flux properties. This allows in examples to infer how representations of paths of propagation of the geological attribute vary from one geological grid to another. This allows to infer similarities and/or disparities between the geological grids based on said representations of paths.

The method according to the invention further comprises the following:
- the determining of the second distribution comprises:
   ∘ providing, among respective cells, one or more seed cells;
   ∘ performing a front propagation algorithm from the one or more seed cells, the front propagation algorithm resulting in visited cells; and
   ∘ back propagating each cell of at least a part of the visited cells to a seed cell, the back propagating comprising computing, for each respective cell, the flux value on the cell, the flux value corresponding to a number of cells which are back propagated through the cell.

In examples, the method may comprise one or more of the following:
- the performing of the front propagation algorithm comprises iteratively expanding a front of cells, the iterative expanding comprising iterations of:
   ∘o determining, among the cells of a previous front of cells, a next parent cell, the determining of the next parent cell rewarding a next parent cell based on its geological attribute value;
   ∘ removing the next parent cell from the front of cells; and
   ∘ expanding the previous front of cells to a next front of cells by collecting the neighboring cells of the next parent cell;
- the expanding of the previous front of cells further comprises:
   ∘ for each collected neighboring cell, storing said next parent cell;
- rewarding a next parent cell based on its geological attribute value comprises rewarding a small time of flight from the previous parent cell to the next parent cell;
- the time of flight is based on a slowness at the next parent cell and/or is based on a distance between the previous parent cell and the next parent cell;
- the slowness at the next parent cell is based on the geological attribute value on the next parent cell;
- rewarding a next parent cell based on its geological attribute value comprises rewarding a highness of an absolute value of the geological attribute value on the next parent cell;
- the back propagating comprises:
   ∘ setting to an initial value the flux value on each respective cell of all the visited cells;
   ∘ for each cell of the at least a part of the visited cells, iteratively finding each parent cell of the cell and, each time a parent cell is found, incrementing the flux value on the parent cell;
- the method further comprises, for each geological grid, setting to zero the flux values of respective cells which are lower than a predefined threshold;
- the subsoil comprises a gas and/or oil reservoir; and/or
- the geological attribute is a porosity, a permeability, or a density of geological fractures.

It is further provided a computer program according to claim 12 comprising instructions for performing the method.

It is further provided a device according to claim 13 comprising a data storage medium having recorded thereon the computer program.

The device may form or serve as a non-transitory computer-readable medium, for example on a SaaS (Software as a service) or other server, or a cloud based platform, or the like. The device may alternatively comprise a processor coupled to the data storage medium. The device may thus form a computer system in whole or in part (e.g. the device is a subsystem of the overall system). The system may further comprise a graphical user interface coupled to the processor.

### BRIEF DESCRIPTION OF THE DRAWINGS

Embodiments of the invention will now be described, by way of non-limiting example, and in reference to the accompanying drawings, where:

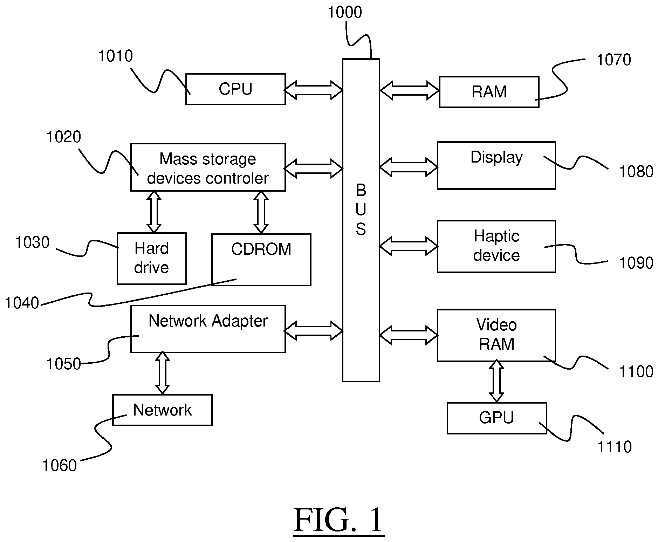

- FIG. 1 shows an example of the system; and
- FIG.s 2 to 16 illustrate the method.

### DETAILLED DESCRIPTION OF THE INVENTION

The method comprises providing one or more geological grids each representing the subsoil. The subsoil may be any subsoil of interest, such as any subsoil comprising, consisting in or forming a part of one or more hydrocarbon fields, such as oil and/or gas fields. In examples, the subsoil comprises a gas and/or oil reservoir. The reservoir may be or may be included in a cuboid of dimensions of the order of 5 kilometers x 10 kilometers x 300 meters *(e.g.* ± 50%, 25% or 10% for each dimension). The reservoir may be much larger on middle east fields where the X, Y coordinates can be multiplied by ten.

It is to be understood that by "providing one or more geological grid", it is meant "providing one or more realizations of a geological grid" or "providing one or more geological grid realizations" (i.e. multi-realization).

The providing of the one or more geological grids may comprise retrieving (*e.g.* from a distant computer) at least a part of the one or more geological grids (*e.g.* all of them) from a memory where the at least a part is stored. Each geological grid of said at least a part may have been created prior to its/their storing on the memory. The method may alternatively or additionally comprise the creation of at least another part of the one or more geological grids (*e.g.* all of them). For each geological grid of the one or more geological grid, the providing of the geological grid may comprise displaying a (*e.g.* 3D) view of the geological grid.

The expression "creating a geological grid representing the subsoil" designates any operation participating to reaching a geological grid representing the subsoil and can be performed according to any known process.

The method comprises, for each geological grid, providing a first distribution. The providing of the first distribution is now discussed.

The first distribution comprises geological attribute values each on a respective cell. Each geological attribute value on a respective cell represents a value of the geological attribute in the respective portion of the subsoil represented by the respective cell. In examples, the geological attribute is a porosity, a permeability, or a density of geological fractures.

The geometrical attribute values of the first distribution are distributed on (*e.g.* assigned to) cells of at least a part of the geological grid (*e.g.* all cells of the geological grid). In examples, the at least a part of the geological grid is a connected set of cells or consist in several connected set of cells. The at least a part may for example represent a region of interest within the subsoil, such as (*e.g.* a region comprising) a reservoir or several reservoirs. The region of interest may notably be a hydrocarbon production region, *e.g.* comprising one or more injection wells and/or one or more production wells.

The method further comprises determining a second distribution based on the first distribution. The determining of the second distribution is now discussed.

The second distribution comprises flux values each on a respective cell. The second distribution is determined based on the first distribution. As such, the flux values are inferred or computed based on the first distribution, *e.g.* based on a repartition on the geological grid of the geological attribute values comprised in the first distribution. Each flux value on a respective cell represents a flux of the geological attribute in the respective portion represented by the respective cell. As such, the flux value is a value representing a quantification of how the geological attribute value propagates through the respective cell and towards neighboring cells of the respective cell. This amounts to say that the flux value represents an intensity of propagation of the geological attribute at the portion of the subsoil represented by the respective cell.

For each geological grid, the second distribution which is determined by the method constitutes numerical data representative of a propagation and/or a flux of the geological attribute through the subsoil. This allows many applications related to hydrocarbon production

The method which yields the second distribution based on the first distribution comprises iteratively exploring groups of neighboring cells and determining propagation directions of the flux values through explored cells. Such iterative determinations may notably comprise iteratively assessing proximities between neighboring cells with respect to their geological attribute values. This may notably comprise the application of any known front propagation algorithm, such as the well-known Fast Marching Algorithm or Best Neighbor propagation algorithm.

According to the invention, the determining of the second distribution comprises providing, among respective cells, one or more seed cells. In these examples, the determining of the second distribution further comprises performing a front propagation algorithm from the one or more seed cells. The front propagation algorithm results visited cells. In these examples, the determining of the second distribution further comprises back propagating each cell of at least a part of the visited cells. The back propagating comprises computing, for each respective cell, the flux value on the cell. The flux value corresponds to a number of cells which are back propagated through the cell.

Propagating a front of cells and back propagating cells of the final front is a simple, robust and fast manner of determining the second distribution. Furthermore, the flux value on a cell, by corresponding to the number of cells back propagated through the cell, truly represents an intensity of propagation of the geological attribute value through the cell. Indeed, performing only the propagation algorithm may yield some information on the propagation of the geological attribute values on parts of the subsoil, whereas carrying out in addition the back propagating allows to infer the intensity of propagation. This notably allows to infer portions of the subsoil with high propagation of the geological attribute, such as the previously-discussed paths of propagation.

The front propagation algorithm may be any front propagation algorithm, such as a Fast Marching algorithm, or a Best Neighbor propagation algorithm, of which examples such as a Propagation seismic with Stopping criterion value < threshold (positive value), a Propagation seismic with Stopping criterion value > threshold (negative value) or a Propagation Geomodel.

Propagation algorithms and principles of operations thereof are now briefly discussed.

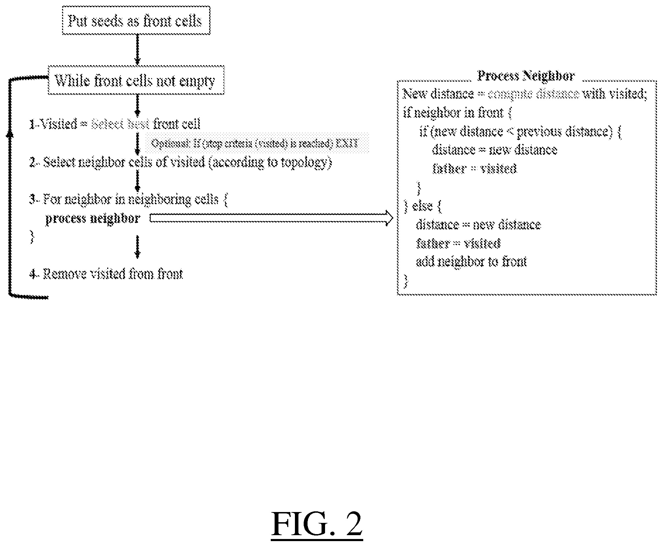

Propagation algorithms are well known. For the sake of completeness, a flowchart describing the general functioning of a propagation algorithm is shown in FIG. 2, which is now discussed.

FIG. 2 shows a flowchart of a general propagation algorithm. Essentially, one computes until the front is empty (essentially this is because limits of the domain of computations are reached, but one may have specified other stopping criteria such as: number of visited cells (volume) or maximal distance of the visited cell). At each iteration:
- 1) the "best cell of the front" is selected. The selection criterion depends on the algorithm and of its use (minimal time, maximal distance, minimal distance);
- 2) neighboring cells of the best cell are collected. The neighboring cell depend on the topology of the grid and the algorithm. In 3D it usually corresponds to the cells (which have not yet been visited yet) sharing a face (or part of it) with the visited cell. In the case of FM in the anisotropic case even cells sharing a vertex are considered as neighbors. Whenever a cell belongs to the neighborhood of the visited cell its cost is calculated. If the cell belonged to the front the cost is compared with the stored one if it is lower than the previous one, the new cost is stored and the parent becomes the last cell visited, otherwise it is not modified. If we do the best neighbor the cost does not change because it is independent of the parent and the cost is not recalculated (we keep the 1st parent).;
- 3) each neighboring cell is processed; and
- 4) the best cell is removed from the front. This cell will not be used anymore.

The processing of a neighboring cell comprises the following:
- 1) Computing the distance at the best cell (e.g. the cost, the gain, the time of flight/travel). This computation depends on the chosen algorithm.
- 2) In examples of the method, the best cell (which may also be referred to as the father cell or the parent cell) of the processed cell is stored; and
- 3) The neighboring cell is added to the front.

As shown on FIG. 2, the algorithm is general and there exists many forms of it widely described in the literature. However, in examples of the method, the algorithm comprises storing, for each processed cell, the father cell in order to compute the flux value (also referred to as flux property). This type of algorithm may be applied to any type of grid, such as any type of geological grid.

In case of the method, the algorithm may be applied in a geomodel (reservoir grid), the algorithm being a Fast Marching taking for examples as slowness the inverse or a function of a permeability. Such an algorithm may in this case be used as an approximative simulator for example to study the problems of connectivity and of draining radius, in particular for the positioning of wells.

In case of the method, the algorithm may be applied in a geomodel (geological grids tending to be the same as the reservoir grids) on porosity (on propagation) to measure volumes.

In case of the method, the algorithm may be applied in seismic grid (or intermediary grids called Hybrid-grid) with seismic properties of the 4D anomaly type to measure drained volumes or pseudo petrophysical properties (*i.e.* transformed seismic properties) for measuring sand volumes. In both cases, the seismic properties are complex images of petrophysical properties or dynamical properties. They are not interesting as such, but the underlying information are of interest.

As computation times are fast one can easily carry out propagation algorithms on multiple realizations of a same grid. However in the general case one just looks at the result in its globality (the volume of bodies which correspond to the front or at best the front itself (body) but never the inside of the body), more than to do an analysis of the detail. There the flux values intervene, as they extract/synthetize principal information of computed bodies.

In examples, the next chosen cell is the one which has the lowest cost among all cells of the front. Cost depends on the chosen algorithm e.g. least time of flight for the Fast Marching, highest or lowest (or any transformed) property value for algorithm of the type "best neighbors".

In any case, the propagation algorithm receives as input one or more seed cells from which the algorithm will start. The one or more seed cells are provided prior to the execution of the algorithm. The providing of the one or more seed cells may be carried out by a user. For example, the user may select the one or more seed cells by graphical interaction with the geological grid, *e.g.* by clicking on each seed cell he/she wishes to select, the grid being displayed on a display. Alternatively, the user may select the one or more seed cells by providing specifications of the cell(s) he/she wishes to select (*e.g.* its/their coordinates).

The front propagation algorithm results in visited cells. By "visited cell", it is meant any cell of the grid which has been part of the front of cells at a step of the algorithm. The visited cells may be all the cells of the grid or at least a part of the cells of the grid, *e.g.* depending on whether the algorithm has a stopping criterion or not and/or depending on the geological attribute.

The back propagating designates any method for back propagating one or more cells, each up to a seed cell. In other words, back propagating a cell means going backwards the propagation algorithm up to the original seed cell from which the cell has been reached by the propagation. The back propagating back propagates at least a part of the visited cells, the at least a part of the visited cells being either the visited cells or a strict subset of the visited cells.

The back propagating comprises computing, for each respective cell, the flux value on the cell. The flux value corresponds to a number of cells which are back propagated through the cell. In examples, the flux value equals the number cells visited from the cell, or in other words, the number of visited child cells which have for ancestor the cell. The back propagating and the computing of the flux value will be further discussed hereinafter.

The performing of the front propagation algorithm is now further discussed.

In examples, the performing of the front propagation algorithm comprises iteratively expanding a front of cells. The iterative expanding comprises iterations of: determining, among the cells of a previous front of cells, a next parent cell, removing the next parent cell from the front of cells, and expanding the previous front of cells to a next front of cells by collecting the neighboring cells of the next parent cell. The determining of the next parent cell rewards a next parent cell based on its geological attribute value.

In such examples, the expanding of the previous front of cells may further comprise for each collected neighboring cell, storing said next parent cell. This allows to remember parent cells within the propagation algorithm, which allows to perform the back propagating. In other words, in these examples, the propagation algorithm, stores in each collected or visited cell which is its parent. Using this property (parent cell) it is easy to trace back from each cell of the final front to the original seed or from each cell visited to the original seed. If all the visited cells or the cells of the final front are traced backwards all the cells visited during the propagation algorithm will be visited during the back propagation since any visited cell is either part of the front or an ancestor of a cell of the front.

In examples, rewarding a next parent cell based on its geological attribute value comprises rewarding a small time of flight (which may also be referred to as a time of travel) from the previous parent cell to the next parent cell. The rewarded cell, which is the next parent cell, may also be referred to as "the best cell" or "the chosen cell". The time of travel may be based on (*e.g.* be a function of) a slowness at the next parent cell and/or may be based on (*e.g.* be a function of) a distance between the previous parent cell and the next parent cell. The slowness at the next parent cell may be based on (*e.g.* be a function of) the geological attribute value on the next parent cell.

In other examples, rewarding a next parent cell based on its geological attribute value comprises rewarding a highness of an absolute value of the geological attribute value on the next parent cell.

The back propagating is now further discussed.

In examples, the back propagating comprises setting to an initial value the flux value on each respective cell of all the visited cells. In these examples, the back propagating further comprises, for each cell of the at least a part of the visited cells, iteratively finding each parent cell of the cell and, each time a parent cell is found, incrementing the flux value on the parent cell.

Examples of algorithms implementing the back propagating are now discussed.

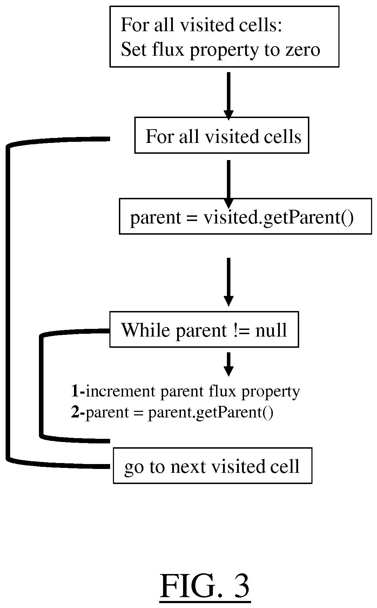

FIG. 3 shows a flowchart of a first algorithm implementing the back propagating. This algorithm is strong and works whatever stopping criterion of the propagation is chosen.

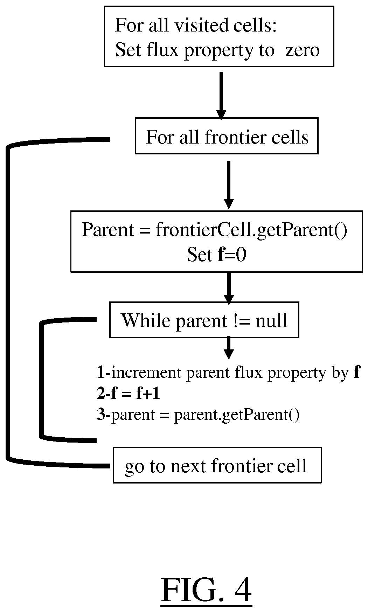

FIG. 4 shows a flowchart of a second algorithm implementing the back propagation. This algorithm is an approximation and works only when stopping criterion is of type: property > value or time < max time i.e. when the front has not reached the frontier of the grid.

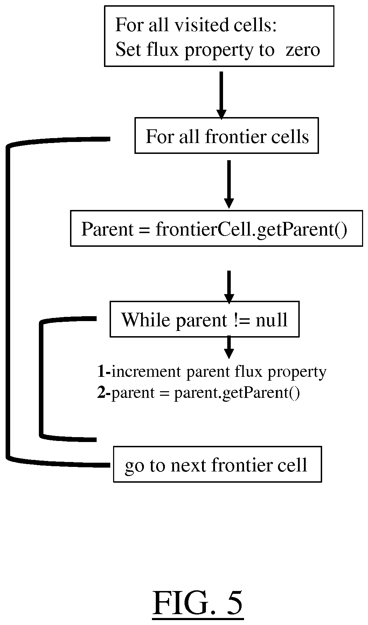

FIG. 5 shows a flowchart of a third algorithm implementing the back propagation. This algorithm is another approximation and works only when stopping criterion is of type: property > value or time < max time i.e. when the front has not reached the frontier of the grid. Nevertheless since the number of cells at front position is usually very large it gives acceptable results regarding the flux.

It is to be understood that many variations around these algorithms can exist (e.g. setting flux property originally to 1 in the first algorithm). In particular, the back propagating may be implemented by any variation of theses algorithms that do not change their final results, *i.e.* cells with high flux values are representative of the main paths.

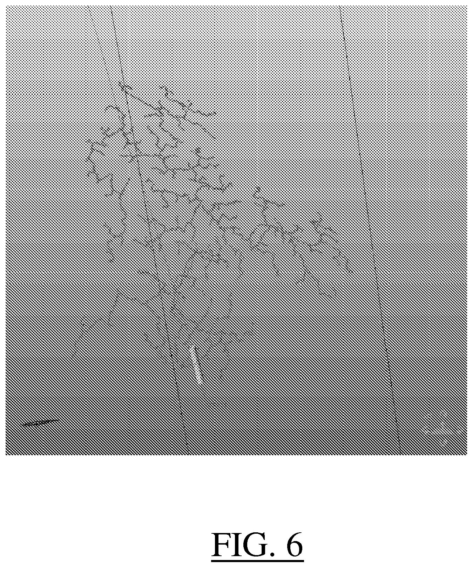

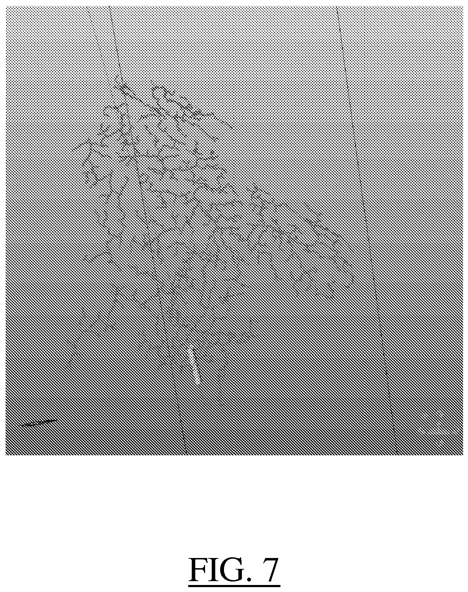

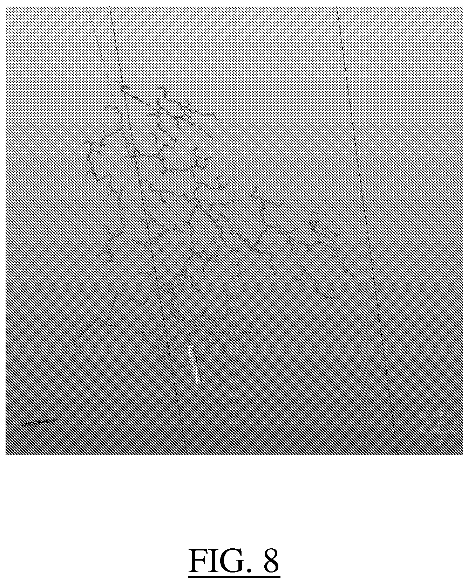

FIG.s 6, 7 and 8 shows three results obtained by these three algorithms. Specifically, FIG. 6 shows a result obtained with the first algorithm, FIG. 7 shows a result obtained with the first algorithm and FIG. 8 shows a result obtained with the third algorithm. The algorithms have been launched on the same data with the same parameters (exactly the same filtered threshold, which is discussed hereinafter). As expected the result of the first algorithm is in-between the results of the second and third algorithms but same patterns are obtained. By adjusting threshold it would be possible to get (almost) the same images.

In examples, the method further comprises, for each geological grid, setting to zero the flux value of respective cells which is lower than a predefined threshold. The threshold may be selected by a user, *e.g.* before the determining of the second distribution or after. The setting to zero may be carried out automatically, *e.g.* subsequent to the back propagating and/or upon a user command. This allows to post-process the determined second distribution such that only cells with a high flux value (*i.e.* higher than the predefined threshold) have a non-zero flux value. These cells may constitute a so-called spine/skeleton of the geological attribute. In other words the setting to zero refines the distribution of flux values determined by the method by yielding only those on which the geological attribute values are intensively propagated. In examples, when the geological attribute is a porosity, this allows to obtain a distribution of flux values representative of (*e.g.* connected) regions of the subsoil with high porosity, such as channels. In other examples, when the geological attribute is a permeability, this allows to obtain a distribution of flux values representative of (*e.g.* connected) regions of the subsoil with high propagation of fluid flows, such as connections between injection wells and production wells.

In examples, the distribution of flux values as such may have little or no interest. Indeed one has then a property for each cell and may have to filter the data by keeping only the cells of the grid which have a flux value larger than the predefined threshold. The threshold may depend on the number of cells of the grid, but a threshold which has an order of magnitude equal to 100 works in numerous examples. Cells which are filtered this way represent a skeleton of the propagation and the preferred paths. They allow to analyze the inside of bodies, for example to locate bottlenecks but also to analyze multi-realization as information is condensed.

In examples, the method may further comprise extracting the geological attribute values of the cells of which flux values are each higher than the predefined threshold. This allows to extract only significant values of the geological attribute, *e.g.* for interpretation and/or display along paths of propagation of the geological attribute. If the method is applied to seismic data that is affected by noise, it allows to see the places of minimum noise. More precisely, we will extract the value of the seismic property considered on the most important paths (with a strong flow) and check that these paths have values of the property> at the noise threshold. This allows to show if along a bottleneck a zone of low geological attribute values exists which would have broken the flux if the threshold was higher or if the manner with which the geological attribute values have been assigned and/or computed had some uncertainty.

Four applications of the method are now discussed.

In a first application, the propagation algorithm is a Fast Marching algorithm. In this algorithm the next parent cell is the one having the smallest time of flight/travel. In this first application, the geological attribute (also referred to as property) may be a porosity/permeability. This provides an equivalent to diffusivity equation (pressure front). The property may alternatively be 1/permeability. This provides an equivalent to Darcy law (saturation front). The first application may be used in one or more of the following contexts: Draining areas, Well positioning, Fast flow simulation and/or Development scheme. This first application may yield main path(s) (similar to stream-lines). This first application may additionally or alternatively allow for Analysis of multi geological realizations, which may include one or more of the followings: Assisted History Marching pre-processing, Detection of singularities and/or Analysis of connectivity.

In a second application, the propagation algorithm is a Propagation seismic with Stopping criterion value < threshold (positive value). In this algorithm the next parent cell is the one having the highest property value. In this second application, the property may be a 4D anomaly (Dlp/lp, DVp/Vp, Dro/Ro) in water flooded area. The second application may be used in one or more of the following contexts: Body creation, Water allocation to well, Update of geomodel and/or 4D-Assisted History Marching. This second application may allow for one or more of the followings: Detection of singularities, analysis of inversion multi-realizations, and/or Analysis of connectivity.

In a third application, the propagation algorithm is a Propagation seismic with Stopping criterion value > threshold (negative value). In this algorithm the next parent cell is the one having the lowest property value (as negative values are considered it is also the one having the highest absolute property value). In this third application, the property may be a 4D anomaly (Dlp/lp, DVp/Vp, Dro/Ro) in Gas exsolution. The third application may be used in one or more of the following contexts: Body creation, Update of geomodel and/or 4D-Assisted History Marching. This third application may allow for one or more of the followings: Detection of singularities, analysis of inversion multi-realizations, and/or Analysis of connectivity.

In a fourth application, the propagation algorithm is a Propagation Geomodel. In this algorithm the next parent cell is the one having the highest property value. In this fourth application, the property may be a porosity, a permeability, a porosity/permeability or a Poro x Sw. The fourth application may be used in one or more of the following contexts: Geomodel analysis, Volume calculation and/or Multi-realizations. This fourth application may yield main path(s) (similar to stream-lines). This fourth application may additionally or alternatively allow for Analysis of multi geological realizations, which may include one or more of the followings: Assisted History Marching pre-processing, Detection of singularities and/or Analysis of connectivity.

The method and/or applications of the method may be included in a hydrocarbon production process, which may comprises performing one or more physical actions. The performing of the one or more physical actions may be based on information yielded by the method and/or its applications, and/or may be based on a geological grid analysis allowed by the method. The one or more physical actions may comprise extracting hydrocarbon and/or injecting fluid in the subsoil to enhance extraction, fracking, performing (*e.g.* seismic) measurements, and/or drilling and/or operating one or more (*e.g.* production and/or injections) wells.

The method is computer-implemented. This means that steps (or substantially all the steps) of the method are executed by at least one computer, or any system alike. Thus, steps of the method are performed by the computer, possibly fully automatically, or, semiautomatically. In examples, the triggering of at least some of the steps of the method may be performed through user-computer interaction. The level of user-computer interaction required may depend on the level of automatism foreseen and put in balance with the need to implement user's wishes. In examples, this level may be user-defined and/or pre-defined.

A typical example of computer-implementation of a method is to perform the method with a system adapted for this purpose. The system may comprise a processor coupled to a memory and a graphical user interface (GUI), the memory having recorded thereon a computer program comprising instructions for performing the method. The memory may also store a database. The memory is any hardware adapted for such storage, possibly comprising several physical distinct parts (*e.g.* one for the program, and possibly one for the database).

FIG. 1 shows an example of the system, wherein the system is a client computer system, e.g. a workstation of a user.

The client computer of the example comprises a central processing unit (CPU) 1010 connected to an internal communication BUS 1000, a random access memory (RAM) 1070 also connected to the BUS. The client computer is further provided with a graphical processing unit (GPU) 1110 which is associated with a video random access memory 1100 connected to the BUS. Video RAM 1100 is also known in the art as frame buffer. A mass storage device controller 1020 manages accesses to a mass memory device, such as hard drive 1030. Mass memory devices suitable for tangibly embodying computer program instructions and data include all forms of nonvolatile memory, including by way of example semiconductor memory devices, such as EPROM, EEPROM, and flash memory devices; magnetic disks such as internal hard disks and removable disks; magneto-optical disks; and CD-ROM disks 1040. Any of the foregoing may be supplemented by, or incorporated in, specially designed ASICs (application-specific integrated circuits). A network adapter 1050 manages accesses to a network 1060. The client computer may also include a haptic device 1090 such as cursor control device, a keyboard or the like. A cursor control device is used in the client computer to permit the user to selectively position a cursor at any desired location on display 1080. In addition, the cursor control device allows the user to select various commands, and input control signals. The cursor control device includes a number of signal generation devices for input control signals to system. Typically, a cursor control device may be a mouse, the button of the mouse being used to generate the signals. Alternatively or additionally, the client computer system may comprise a sensitive pad, and/or a sensitive screen.

The computer program may comprise instructions executable by a computer, the instructions comprising means for causing the above system to perform the method. The program may be recordable on any data storage medium, including the memory of the system. The program may for example be implemented in digital electronic circuitry, or in computer hardware, firmware, software, or in combinations of them. The program may be implemented as an apparatus, for example a product tangibly embodied in a machine-readable storage device for execution by a programmable processor. Method steps may be performed by a programmable processor executing a program of instructions to perform functions of the method by operating on input data and generating output. The processor may thus be programmable and coupled to receive data and instructions from, and to transmit data and instructions to, a data storage system, at least one input device, and at least one output device. The application program may be implemented in a high-level procedural or object-oriented programming language, or in assembly or machine language if desired. In any case, the language may be a compiled or interpreted language. The program may be a full installation program or an update program. Application of the program on the system results in any case in instructions for performing the method.

An implementation of the method is now discussed with reference to FIG.s 9 to 16. In this implementation the geological attribute may be referred to as "property".

As previously said, a geomodel is a numerical representation of the earth and is based on the integration of many different attributes from various disciplines. The model is an approximate representation of the truth, and the new trend is to represent many realizations of the model in order to cover as much as possible the range of possible. Associated with that, new algorithms (ensemble based) have been developed to produce these realizations of the model (*e.g.* stochastic inversion or various geostatistical technologies) or to exploit the multi-realizations to perform optimization of model and risk analysis (*e.g.* Assisted History Matching with Ensemble Methods).

Even on a single model realization it may be difficult to explore and analyze the model and to determine where are the risked areas. One way of doing that is to examine the model visually but on a complex 3D object it is a tedious hazardous task. Another approach is to "simulate" the model (*e.g.* using a flow simulator) but this is long, costly and provide information on the simulated parameter and not directly on the model itself. Another more practical option is to use proxies such as connectivity and to calculate connected volumes.

An approach for computing volume/bodies using Fast Marching as a proxy for flow simulation exists. The results of this analysis is a connected body to a source position, but the size and the shape of the body is strongly dependent on the "slowness" and the cut-off used for the Fast Marching.

Bodies are 3D (possibly very complicated) surfaces and are not so easy to manipulate and to scrutinized.

Difficulty may increase when dealing with multi-realizations since the man's mind is essentially efficient for 2D representation (like a movie) but very bad at integrating multiple 3D realizations.

The present implementation aims at facilitating the analysis of either a single or multi-realizations of a model by providing a much more convenient way of visualizing key information and providing quantitative information on the model.

In this implementation the method calculates the main paths of propagation of the geological attribute value starting from a seed cell or an ensemble of seed cells. It finally provides a sort of skeleton (spine) of the grid. The method first performs a front propagation on the geological attribute value starting from the seed(s). The path are related to the chosen property. The applications of this implementation can be numerous, especially in oil production.

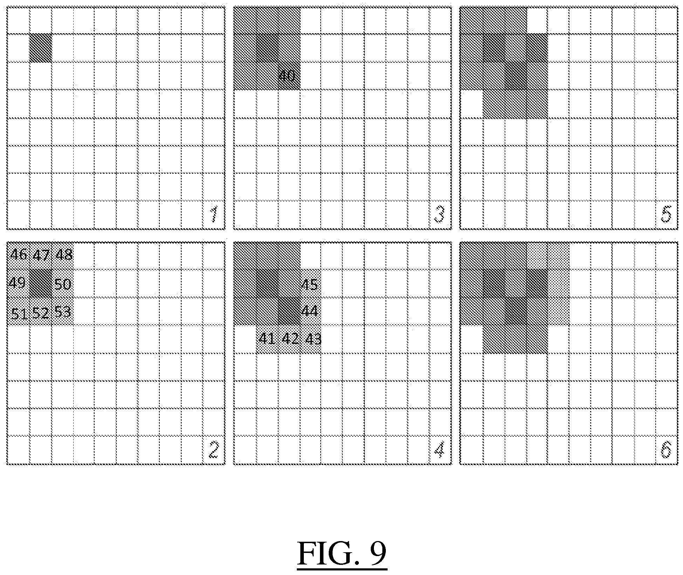

Referring to FIG. 9, the performing of a front propagation comprises running a front propagation like algorithm *i.e.* an iterative process that starts from a seed or a set of seeds (which could be defined as a region) and which, at each iteration expends the "front" by one cell chosen as the best candidate. The algorithm can be to a Fast Marching algorithm or a simple Propagation algorithm, illustrated on FIG. 9. The algorithm stores each parent cell of cells collected to form the next front of cells as previously discussed, *e.g.* the cell number of the red cell 40 of step 3 in FIG. 9 for all the light green cells 41, 42, 43, 44, 45, 46 of step 4. This algorithm can be applied on any numerical model representation from voxel, to unstructured grid.

Still referring to FIG. 9, this implementation next comprises the back propagating. A new property "flux" is created of the size of the grid and initialized to 0. Starting from each cell of the final front of cells and going backwards up to the original seeds the path conducting to the current treated cell is back propagated using the parent index recursively and any time a parent cell is explored the "flux" property corresponding to the parent cell is incremented by 1. For example if the propagation was stopped at step 2 (in FIG. 9) the light green cells 46, 47, 48, 49, 50 ,51, 52, 53 would have a flux of 1 and the blue cell (*i.e.* the cell surrounded by the cells 46, 47, 48, 49, 50 ,51, 52, 53) a flux of 9. If it was stopped at step 4 the initial cell (*i.e.* the only filled cell in step 1) would have a flux of 14 and all the light grey cells of step 2 46, 47, 48, 49, 50,51, 52, 53 except the one in red 40 at step 3 the same flux of 1, and the red cell 40 at step 3 a flux of 7. Thus, in this implementation, the flux at a given cell represents the number of son cells that have been propagated from this cell. This highlights any bottleneck and the path of cells to it (spin), or any singular point, which corresponds to a cell with high flux value and having neighboring cells with low flux values.

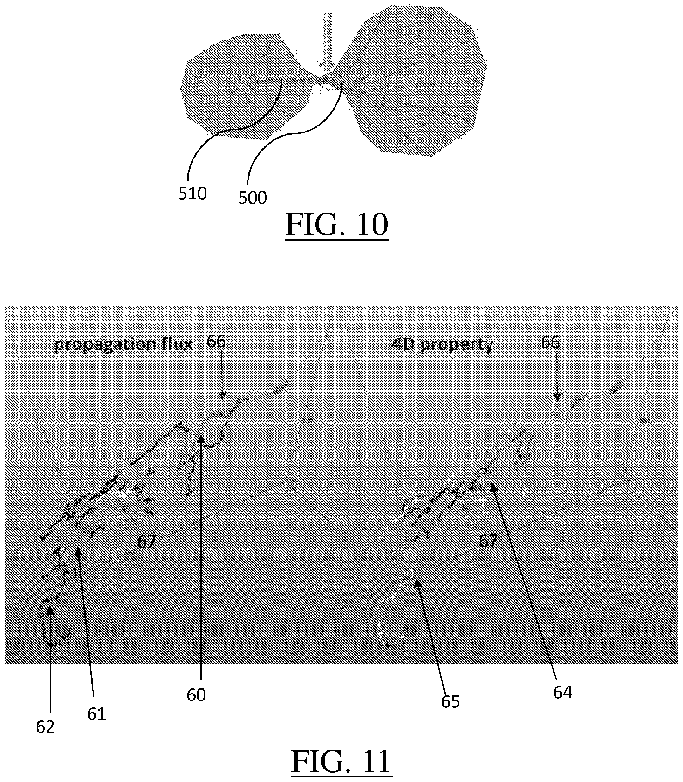

Specifically, a rapid change in flux values is representative of a singularity. FIG. 10 shows a highlighted bottleneck (red circle 500) and the corresponding spin (fat arrow 510). The original seed cells may not be singular in terms of the model but should have a high flux since all paths converge to it (see FIG. 10).

This implementation of the method may also comprise a filtering which consists in setting to zero all the flux values which are less than a predefined threshold, as previously discussed. Therefore only the spine remains. This post processing is very effective to enhance the benefit of the flux. In an application of this implementation, the method comprises extracting a geological attribute along the filtered flux, *i.e.* the cells with a flux value higher than a predefined threshold. By this mean, only the main significant values of a geological attribute will be proposed for interpretation. If the propagation algorithm is used it will be of particular interest to extract the geological attribute used for the propagation itself. This would show if along a spin or at a bottleneck a zone of low values exists which could have broken the flux if the threshold was a bit higher or if the way the geological attribute was created had some uncertainty. In the case of Fast Marching it may not be the slowness itself which is the main interesting property to show since it is usually a transformation of an underlying physical property more meaningful.

In the case of multi-realizations, two applications of this implementation of the method may be proposed:
- since the relevant information is already concentrated by the filtered flux a multi-realization flux is feasible and using an animation it would reveal the variability of the model; and/or
- computing a cumulative flux by summing the flux for each realization. If the spins and bottlenecks are stationary the cumulative flux is neat and clean, if the variability is limited flux becomes fuzzy and blurred and if the variability is large the cumulative flux shows multipaths.

The implementation may comprise creating pointsets rather than properties (or in addition to) because pointsets are much easier to visualize in 3D and that the connectivity is ensured by the process itself. The following FIG.s 11 to 14 have been created on real data using pointsets painted with flux and using a propagation algorithm on a 4D property estimated using a stochastic inversion.

FIG. 11 shows a filtered flux showing the connection between an injection well and a production well. Left the Filtered flux (red high values 60, grey intermediate values 61, black low values 62). Right the 4D property used during the propagation and extracted along spins of flux (*i.e.* location of high flux values): dark blue high 4D anomaly 64, light blue low 4D anomalies 65. The seed is set at the production well (black arrow 66) corresponding to the highest flux values, the 4D property is relatively high along the path between the 2 wells enforcing confidence for connectivity. The red arrow 67 indicates a forking (notice the change of color of the flux) with water propagating in a different layer.

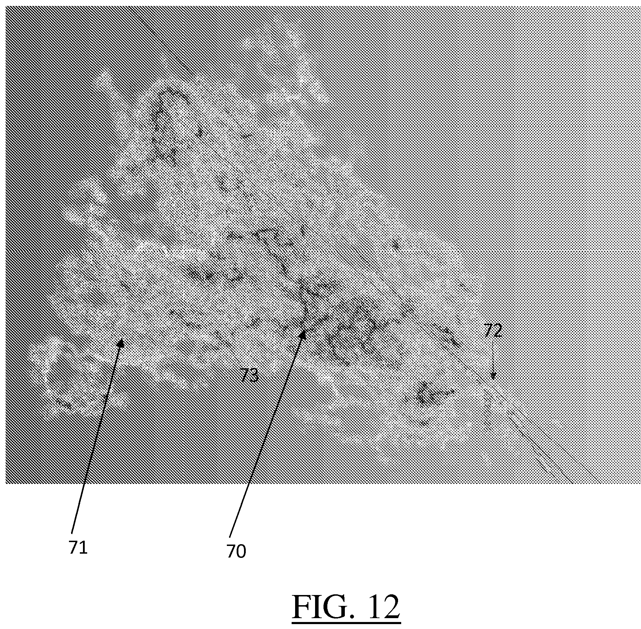

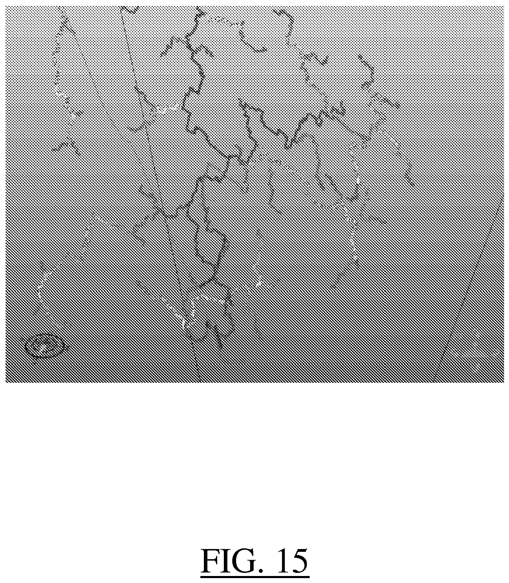

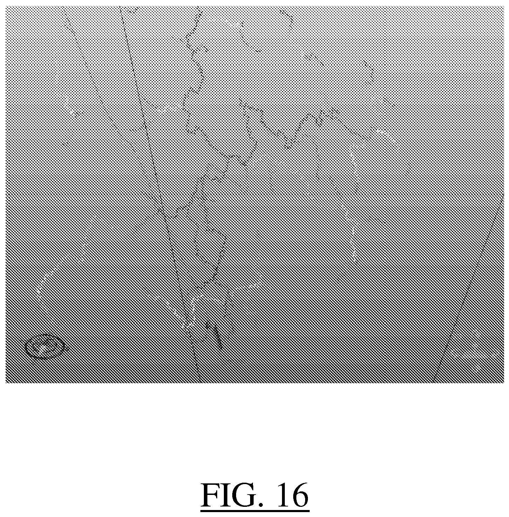

FIG. 12 shows a very lightly filtered flux showing the connection between an injection well and a production well. The 4D property used during the propagation and extracted along the cells of flux (*i.e.* location of low medium to high flux values): dark blue high 4D anomaly 70, light blue low 4D anomalies 71. The seed is set at the production well (black arrow 72) corresponding to the highest flux values, the 4D property is relatively high along the path between the two wells enforcing confidence for connectivity. The red arrow 73 indicates a forking with water propagating in a different layer. Using point sets from flux the 3D view is able to show the volume of 4D anomaly One may also create graphs showing connections, as shown in FIG. 15 and FIG. 16 which are discussed hereinafter.

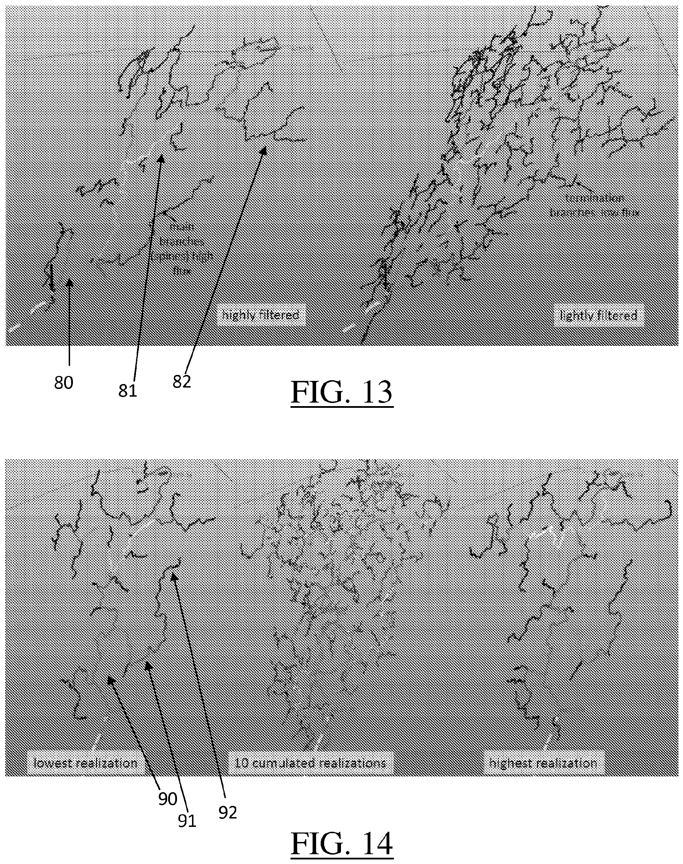

FIG. 13 shows a filtered flux showing the connection between an injection well and a production well (red high values 80, grey intermediate values 81, black low values 82). Left the highly Filtered flux property only points with a flux value higher than 1000 are shown. Right lightly filtered flux (points with flux higher than 100 are shown). If no filtered was applied the space would be almost filled like on the Figure12.

FIG. 14 shows a filtered flux showing the connection between an injection well and a production well (red high values 90, grey intermediate values 91, black low values 92). Left the Filtered flux property lowest realization only. Middle 10 cumulated realizations (lowest to largest) . Right largest realization only.

Even more beneficial it is possible to create graphs (or trees) *i.e.* a structured representation of the flux path. The nodes of the path are the point-sets and in addition we calculate the edge connection(s) between points. Graphs are easy to visualize but keep the topology of the path.

FIG. 15 shows an example of a graph representation of the flux property: points are connected with edges and therefore connectivity is kept. In FIG. 16 the point set representation of the flux property connectivity is recreated by eye.

## Claims

1. A computer-implemented method of geological grid analysis, for hydrocarbon production, based on values of a geological attribute in a subsoil, the method comprising:
- providing one or more geological grids each representing the subsoil, each geological grid comprising respective cells, each cell representing a respective portion of the subsoil; and
- for each geological grid:
• providing a first distribution, the first distribution comprising geological attribute values each on a respective cell, each geological attribute value representing a value of the geological attribute in the respective portion; and
• determining a second distribution based on the first distribution, the second distribution comprising flux values each on a respective cell, each flux value representing a flux of the geological attribute in the respective portion,
wherein the determining of the second distribution comprises:
- providing, among respective cells, one or more seed cells;
- performing a front propagation algorithm from the one or more seed cells, the front propagation algorithm resulting in visited cells; and
- back propagating each cell of at least a part of the visited cells to a seed cell, the back propagating comprising computing, for each respective cell, the flux value on the cell, the flux value corresponding to a number of cells which are back propagated through the cell.

2. The method of claim 1, wherein the performing of the front propagation algorithm comprises iteratively expanding a front of cells, the iterative expanding comprising iterations of:
- determining, among the cells of a previous front of cells, a next parent cell, the determining of the next parent cell rewarding a next parent cell based on its geological attribute value;
- removing the next parent cell from the front of cells; and
- expanding the previous front of cells to a next front of cells by collecting the neighboring cells of the next parent cell.

3. The method of claim 2, wherein the expanding of the previous front of cells further comprises:
- for each collected neighboring cell, storing said next parent cell.

4. The method of claim 2 or 3, wherein rewarding a next parent cell based on its geological attribute value comprises rewarding a small time of flight from the previous parent cell to the next parent cell.

5. The method of claim 4, wherein the time of flight is based on a slowness at the next parent cell and/or is based on a distance between the previous parent cell and the next parent cell.

6. The method of claim 5, wherein the slowness at the next parent cell is based on the geological attribute value on the next parent cell.

7. The method of claim 2 or 3, wherein rewarding a next parent cell based on its geological attribute value comprises rewarding a highness of an absolute value of the geological attribute value on the next parent cell.

8. The method of any one of claims 2 to 7, wherein the back propagating comprises:
- setting to an initial value the flux value on each respective cell of all the visited cells;
- for each cell of the at least a part of the visited cells, iteratively finding each parent cell of the cell and, each time a parent cell is found, incrementing the flux value on the parent cell.

9. The method of any one of claim 1 to 8, wherein the method further comprises, for each geological grid, setting to zero the flux values of respective cells which are lower than a predefined threshold.

10. The method of any one of claim 1 to 9, wherein the subsoil comprises a gas and/or oil reservoir.

11. The method of any one of claim 1 to 10, wherein the geological attribute is a porosity, a permeability, or a density of geological fractures.

12. A computer program comprising instructions for performing the method of any one of claims 1 to 11.

13. A device comprising a data storage medium having recorded thereon the computer program of claim 12.

14. The device of claim 13, further comprising a processor coupled to the data storage medium.

## Patentansprüche

1. Computerimplementiertes Verfahren zur geologischen Rasteranalyse für die Kohlenwasserstoffproduktion basierend auf Werten eines geologischen Attributs in einem Untergrund, das Verfahren umfassend:
- Bereitstellen von einem oder mehreren geologischen Rastern, die jeweils den Untergrund darstellen, jedes geologische Raster umfassend jeweilige Zellen, wobei jede Zelle einen jeweiligen Abschnitt des Untergrunds darstellt; und
- für jedes geologische Raster:
• Bereitstellen einer ersten Verteilung, die erste Verteilung umfassend geologische Attributwerte jeweils auf einer jeweiligen Zelle, wobei jeder geologische Attributwert einen Wert des geologischen Attributs in dem entsprechenden Abschnitt darstellt; und
• Bestimmen einer zweiten Verteilung basierend auf der ersten Verteilung, die zweite Verteilung umfassend Flusswerte jeweils auf einer jeweiligen Zelle, wobei jeder Flusswert einen Fluss des geologischen Attributs in dem jeweiligen Abschnitt darstellt,
wobei das Bestimmen der zweiten Verteilung Folgendes umfasst:
- Bereitstellung einer oder mehrerer Keimzellen unter den jeweiligen Zellen;
- Durchführen eines Frontpropagationsalgorithmus von der einen oder den mehreren Keimzellen, wobei der Frontpropagationsalgorithmus in besuchten Zellen resultiert; und
- Rückwärtsausbreiten jeder Zelle von mindestens einem Teil der besuchten Zellen auf eine Keimzelle, wobei das Rückwärtsausbreiten für jede jeweilige Zelle ein Berechnen des Flusswerts auf der Zelle umfasst, wobei der Flusswert einer Anzahl von Zellen entspricht, die durch die Zelle rückausgebreitet werden.

2. Verfahren nach Anspruch 1, wobei das Durchführen des Frontpropagationsalgorithmus das iterative Expandieren einer Front von Zellen umfasst, wobei das iterative Expandieren folgende Iterationen umfasst:
- Bestimmen einer nächsten übergeordneten Zelle unter den Zellen einer vorherigen Front von Zellen, wobei das Bestimmen der nächsten übergeordneten Zelle eine nächste übergeordnete Zelle basierend auf ihres geologischen Attributwerts belohnt;
- Entfernen der nächsten übergeordneten Zelle von der Front von Zellen; und
- Expandieren der vorherigen Front von Zellen zu einer nächsten Zellenfront durch Sammeln der benachbarten Zellen der nächsten übergeordneten Zelle.

3. Verfahren nach Anspruch 2, wobei das Expandieren der vorherigen Front von Zellen ferner Folgendes umfasst:
- für jede gesammelte benachbarte Zelle, Speichern der nächsten übergeordneten Zelle.

4. Verfahren nach Anspruch 2 oder 3, wobei das Belohnen einer nächsten übergeordneten Zelle basierend auf ihrem geologischen Attributwert ein Belohnen einer kleinen Flugzeit von der vorherigen übergeordneten Zelle zu der nächsten übergeordneten Zelle umfasst.

5. Verfahren nach Anspruch 4, wobei die Flugzeit auf einer Langsamkeit an der nächsten Mutterzelle und/oder auf einer Entfernung zwischen der vorherigen Mutterzelle und der nächsten Mutterzelle basiert.

6. Verfahren nach Anspruch 5, wobei die Langsamkeit an der nächsten Mutterzelle auf dem Wert des geologischen Attributs an der nächsten Mutterzelle basiert.

7. Verfahren nach Anspruch 2 oder 3, wobei ein Belohnen einer nächsten übergeordneten Zelle basierend auf ihrem geologischen Attributwert ein Belohnen der Höhe eines absoluten Werts des geologischen Attributwerts auf der nächsten übergeordneten Zelle umfasst.

8. Verfahren nach einem der Ansprüche 2 bis 7, wobei die Rückwärtsausbreitung Folgendes umfasst:
- Einstellen des Flusswerts auf jeder einzelnen Zelle aller besuchten Zellen auf einen Anfangswert;
- für jede Zelle des mindestens einen Teils der besuchten Zellen, iteratives Auffinden jeder übergeordneten Zelle der Zelle und, jedes Mal, wenn eine übergeordnete Zelle gefunden wird, Inkrementieren des Flusswerts auf der übergeordneten Zelle.

9. Verfahren nach einem der Ansprüche 1 bis 8, wobei das Verfahren ferner umfasst, dass für jedes geologische Raster die Flusswerte der jeweiligen Zellen, die niedriger als ein vordefinierter Schwellenwert sind, auf Null gesetzt werden.

10. Verfahren nach einem der Ansprüche 1 bis 9, wobei der Untergrund ein Gas- und/oder Ölreservoir umfasst.

11. Verfahren nach einem der Ansprüche 1 bis 10, wobei das geologische Attribut eine Porosität, eine Permeabilität oder eine Dichte von geologischen Brüchen ist.

12. Computerprogramm, umfassend Anweisungen zum Durchführen des Verfahrens nach einem der Ansprüche 1 bis 11.

13. Vorrichtung, umfassend ein Datenspeichermedium, auf dem das Computerprogramm nach Anspruch 12 aufgezeichnet ist.

14. Vorrichtung nach Anspruch 13, ferner umfassend einen Prozessor, der mit dem Datenspeichermedium gekoppelt ist.

## Revendications

1. Procédé, mis en oeuvre par ordinateur, d'analyse de grille géologique, pour la production d'hydrocarbures, sur la base de valeurs d'un attribut géologique dans un sous-sol, le procédé comprenant l'étape ci-dessous consistant à :
- fournir une ou plusieurs grilles géologiques représentant chacune le sous-sol, chaque grille géologique comprenant des cellules respectives, chaque cellule représentant une partie respective du sous-sol ; et
- pour chaque grille géologique :
• fournir une première distribution, la première distribution comprenant des valeurs d'attributs géologiques chacune sur une cellule respective, chaque valeur d'attribut géologique représentant une valeur de l'attribut géologique dans la partie respective ; et
• déterminer une deuxième distribution sur la base de la première distribution, la deuxième distribution comprenant des valeurs de flux chacune sur une cellule respective, chaque valeur de flux représentant un flux de l'attribut géologique dans la partie respective ;
dans laquelle l'étape de détermination de la deuxième distribution comprend les étapes ci-dessous consistant à :
- fournir, parmi les cellules respectives, une ou plusieurs cellules d'amorçage ;
- mettre en oeuvre un algorithme de propagation de fronts à partir de ladite une ou desdites plusieurs cellules d'amorçage, l'algorithme de propagation de fronts aboutissant à des cellules visitées ; et
- rétropropager chaque cellule d'au moins une partie des cellules visitées vers une cellule d'amorçage, l'étape de rétropropagation comprenant l'étape consistant à calculer, pour chaque cellule respective, la valeur de flux sur la cellule, la valeur de flux correspondant à un nombre de cellules rétropropagées à travers la cellule.

2. Procédé selon la revendication 1, dans lequel l'étape de mise en oeuvre de l'algorithme de propagation de fronts comprend une étape d'expansion itérative d'un front de cellules, l'étape d'expansion itérative comprenant des itérations consistant à :
- déterminer, parmi les cellules d'un front de cellules précédent, une cellule parente suivante, l'étape de détermination de la cellule parente suivante récompensant une cellule parente suivante sur la base de sa valeur d'attribut géologique ;
- supprimer la cellule parente suivante du front de cellules ; et
- étendre le front de cellules précédent à un front de cellules suivant en collectant les cellules voisines de la cellule parente suivante.

3. Procédé selon la revendication 2, dans lequel l'étape d'expansion du front de cellules précédent comprend en outre l'étape ci-dessous consistant à :
- pour chaque cellule voisine collectée, stocker ladite cellule parente suivante.

4. Procédé selon la revendication 2 ou 3, dans lequel l'étape consistant à récompenser une cellule parente suivante sur la base de sa valeur d'attribut géologique consiste à récompenser un temps de vol court entre la cellule parente précédente et la cellule parente suivante.

5. Procédé selon la revendication 4, dans lequel le temps de vol est basé sur une lenteur au niveau de la cellule parente suivante et/ou est basé sur une distance entre la cellule parente précédente et la cellule parente suivante.

6. Procédé selon la revendication 5, dans lequel la lenteur au niveau de la cellule parente suivante est basée sur la valeur d'attribut géologique sur la cellule parente suivante.

7. Procédé selon la revendication 2 ou 3, dans lequel l'étape consistant à récompenser une cellule parente suivante sur la base de sa valeur d'attribut géologique consiste à récompenser une hauteur d'une valeur absolue de la valeur d'attribut géologique sur la cellule parente suivante.

8. Procédé selon l'une quelconque des revendications 2 à 7, dans lequel l'étape de rétropropagation comprend les étapes ci-dessous consistant à :
- définir sur une valeur initiale la valeur de flux sur chaque cellule respective de toutes les cellules visitées ;
- pour chaque cellule de ladite au moins une partie des cellules visitées, rechercher de manière itérative chaque cellule parente de la cellule, et, chaque fois qu'une cellule parente est trouvée, incrémenter la valeur de flux sur la cellule parente.

9. Procédé selon l'une quelconque des revendications 1 à 8, dans lequel le procédé comprend en outre, pour chaque grille géologique, l'étape consistant à mettre à zéro les valeurs de flux de cellules respectives qui sont inférieures à un seuil prédéfini.

10. Procédé selon l'une quelconque des revendications 1 à 9, dans lequel le sous-sol comprend un réservoir de gaz et/ou de pétrole.

11. Procédé selon l'une quelconque des revendications 1 à 10, dans lequel l'attribut géologique est une porosité, une perméabilité, ou une densité de fractures géologiques.

12. Programme informatique comprenant des instructions pour mettre en oeuvre le procédé selon l'une quelconque des revendications 1 à 11.

13. Dispositif comprenant un support de stockage de données sur lequel est enregistré le programme informatique selon la revendication 12.

14. Dispositif selon la revendication 13, comprenant en outre un processeur couplé au support de stockage de données.
